# EUROPÄISCHE PATENTSCHRIFT

(11) **EP 1 915 316 B1**
(45) Veröffentlichungstag und Bekanntmachung des Hinweises auf die Patenterteilung: **15.09.2010**
(21) Anmeldenummer: 06760784.6
(22) Anmeldetag: 11.07.2006
(51) Int. Cl.: B66C 23/34, B65G 53/32, E04G 21/04

(54) **FALTBARER AUSLEGER**
FOLDING BOOM
FLECHE PLIANTE

(30) Priorität: 05.07.2006 AT 11432006; 29.07.2005 AT 12842005
(43) Veröffentlichungstag der Anmeldung: 30.04.2008
(73) Patentinhaber: Ehrenleitner, Franz, 72213 Altensteig-Walddorf (DE)
(72) Erfinder: Ehrenleitner, Franz, 72213 Altensteig-Walddorf (DE)
(74) Vertreter: Patentanwälte Barger, Piso & Partner
(86) Internationale Anmeldenummer: PCT/AT2006/000297
(87) Internationale Veröffentlichungsnummer: WO 2007/012094

(56) Entgegenhaltungen:
- EP-A- 0 733 584
- EP-A- 1 398 291

## Beschreibung

Die Erfindung betrifft einen zusammenklappbaren Ausleger entsprechend dem Oberbegriff des Anspruches 1 bzw. 6. Ein solcher Ausleger ist aus der EP 1 398 291 A bekannt. Nachteilig ist, dass maximal drei Elemente zusammenfaltbar sind und dass der Ausleger nur im fertig ausgeklappten Zustand verwendbar ist.

Derartige, im Folgenden summarisch nur "Ausleger" genannte Gebilde sollen einerseits eine große Reichweite, eine in den meisten Fällen (Kranausleger) hohe Tragfähigkeit aufweisen, sie sollen aber andererseits leicht sein, damit die sie tragenden Fahrzeuge auch auf Baustellen und auf Untergründen mit geringer Belastbarkeit einsetzbar sind und sie müssen so klein zusammengefaltet werden können, dass sie im üblichen Straßenverkehr bewegt werden können, ohne als Sondertransport zu gelten.

Bekannte Vorrichtungen dieser Art weisen im Zick-Zack um jeweils parallel zueinander verlaufende Achsen faltbare Abschnitte auf, bei denen, im Wesentlichen parallel zu den einzelnen Gliedern im gestreckten Zustand, hydraulische Zylinder-Kolben-Einheiten angeordnet sind, die die einzelnen Elemente, die stets auf Biegung beansprucht werden, in der jeweils gewünschten Position zueinander halten.

Diese Vorrichtungen weisen nun einige Nachteile auf, die ganz offensichtlich der verwendeten seriellen Kinematik inhärent ist: Um zusammengefaltet werden zu können, müssen die einzelnen Glieder gekröpft ausgebildet sein, das heißt, dass auch im gestreckten Zustand eine im einzelnen geknickte Anordnung vorliegt, die einen ebenfalls geknickten Kraftverlauf zur Folge hat, wodurch die einzelnen Elemente in Abhängigkeit vom jeweiligen Lasthebel deutlich stärker beansprucht werden, als es bei einer gestreckten Anordnung der Fall wäre.

Dazu kommt noch, dass für die gedachte Verwendung ein Profil mit möglichst großem Querschnitt angestrebt wird, das durch das höhere Flächenträgheitsmoment größere Momente übertragen kann, dass aber im zusammengeklappten Zustand möglichst kleine Querschnitte benötigt werden, um die erwähnten geometrischen Grenzen einhalten zu können.

Die Erfindung bezweckt einen Ausleger zu schaffen, der die genannten Nachteile nicht aufweist und der insbesondere bei geringer Masse über hohe Steifigkeit verfügt und dabei dennoch auf engstem Raum zusammenklappbar ist, und der, im Vergleich zum eingangs erwähnten Ausleger, eine beliebige Anzahl von Elementen aufweisen kann und auch im teilweise zusammengefalteten Zustand verwendbar ist.

Erfindungsgemäß werden diese Ziele durch die im kennzeichnenden Teil des Anspruches 1 bzw. 6 angeführten Merkmale erreicht.

Unter Aktuatoren werden in dieser Beschreibung und den Ansprüchen Vorrichtungen wie hydraulische oder pneumatische Zylinder-Kolben-Einheiten verstanden, es können auch elektrische Stelltriebe sein, wie Spindel-Mutter-Antriebe oder wenn reine Zugkräfte zu übertragen sind, auch Zugelemente wie Seile, Bänder oder Ketten.

Durch die erfindungsgemäße Maßnahme sind die einzelnen Glieder nur über die Zwischenstücke miteinander schwenkbar verbunden, die Aktuatoren aber greifen nicht zwischen den Gliedern sondern zwischen den Zwischenstücken einerends und den Gliedern andernends an. Durch diese einfach erscheinende Maßnahme erreicht man eine ganze Reihe unerwarteter Vorteile:

Ein erster großer Vorteil ist, dass diese Anordnung es ermöglicht, den gesamten Ausleger Glied für Glied und Zwischenstück für Zwischenstück in Stabwerke aufzulösen, ja als Ganzes als einheitliches Stabwerk zu betrachten, bei dem einige der Stäbe, nämlich die Aktuatoren, längenveränderlich ausgebildet sind.

Ein zweiter großer Vorteil ist, dass durch die erfindungsgemäße Maßnahme jedes einzelne Glied und daher auch der Ausleger in seiner Gesamtheit ohne Kröpfung geradlinig ausgeführt werden kann, da die Zwischenstücke beim Zusammenfalten dafür sorgen, dass die einzelnen benachbarten Glieder den zum Zusammenfalten notwendigen Abstand voneinander aufweisen, während diese Zwischenstücke im gestreckten Zustand des Auslegers wiederum dafür sorgen, dass dieser vollständig gestreckt ausgebildet ist.

Die Erfindung wird im Folgenden anhand der Zeichnungen näher erläutert. Dabei zeigen die Fig. 1 bis 6 einen erfindungsgemäßen Ausleger in verschiedenen Stadien des Zusammenfaltens teils in Seitenansicht, teils in perspektivischer Ansicht,
die Fig. 7 und 8 zeigen den Grundaufbau eines Gliedes,
die Fig. 9 bis 12 zeigen eine Variante.

Da die Erfindung Vorrichtungen betrifft, die zahlreiche untereinander gleiche oder zumindest fast gleiche Glieder seriell angeordnet umfassen, wurden diese Glieder mit 10, 20, etc. bezeichnet und deren Bauteile durch Verwendung der passenden Zahl in der Zehnerstelle den einzelnen Gliedern zugeordnet. Wenn nun allgemein solche Bauteile beschrieben werden, so wird statt mühseliger Aufzählungen der allgemein Index "i" verwendet.

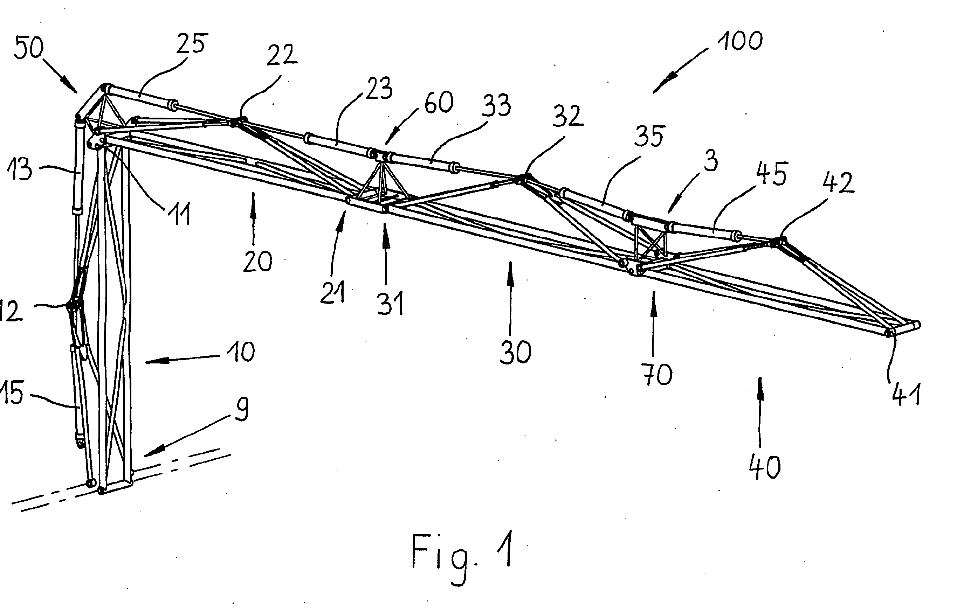

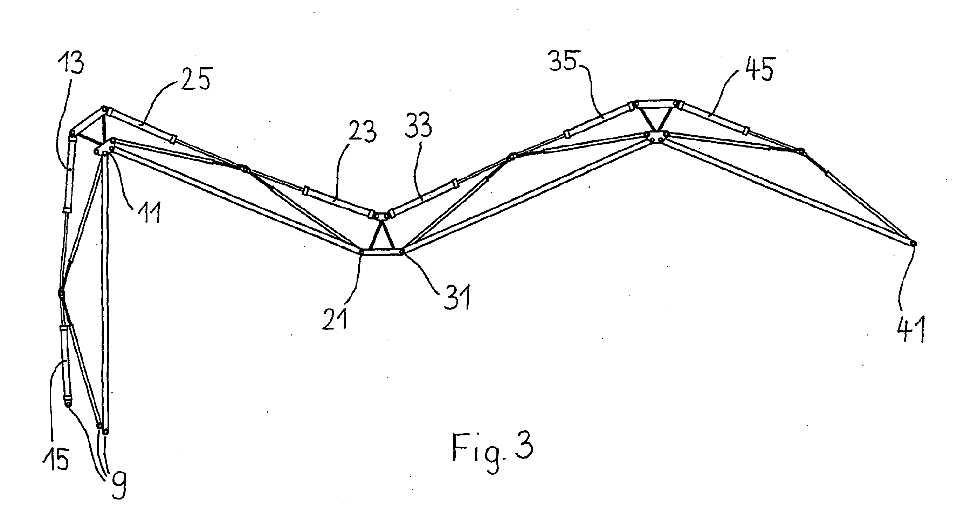

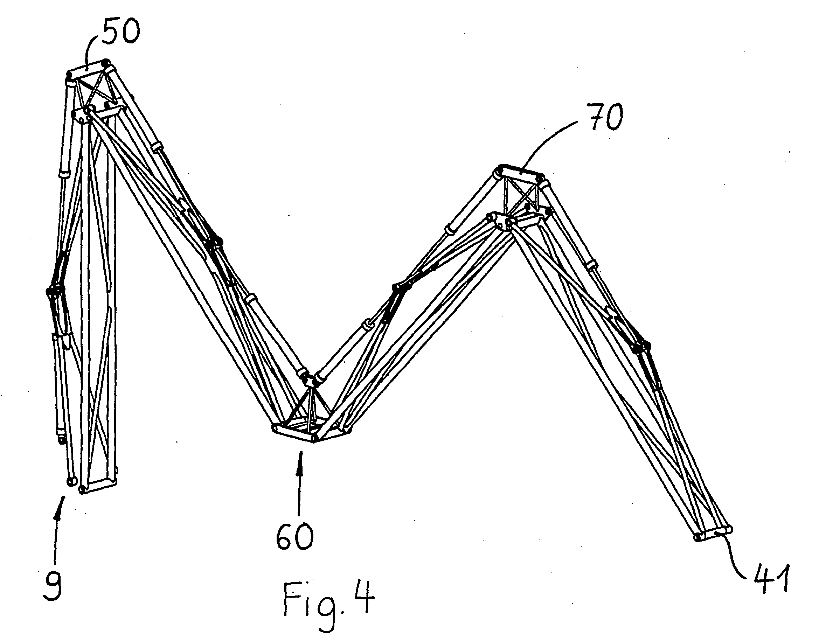

Die Fig. 1 bis 6 zeigen einen erfindungsgemäßen Ausleger, der aus vier untereinander gleichen Gliedern 10, 20, 30 und 40 (im Folgenden i0) und drei Zwischenstücken 50, 60 und 70 besteht, wobei zwei unterschiedliche Arten von Zwischenstücken vorgesehen sind, nämlich zwei äußere Zwischenstücke 50, 70 und ein inneres Zwischenstück 60, das zwischen den äußeren Zwischenstücken liegt.

Von jedem der Zwischenstücke geht zu jedem der ihm benachbarten Glieder ein Aktuator 13, 25, 23, 33, 35, 45, der im dargestellten Ausführungsbeispiel eine hydraulische Zylinder-Kolben-Einrichtung ist, in der Mehrzahl der Anwendungsfälle werden derartige Einrichtungen doppelt wirkend ausgebildet sein. Es ist bei Anwendungen, bei denen sicher gestellt ist, dass die Aktuatoren stets nur auf Zug beansprucht werden, möglich, sie als Zugmittel wie Seil, Band Kette, od.dergl. auszubilden.

Die Fig. 1 zeigt die Arbeitsstellung beispielsweise einer Betonpumpe oder eines Krans, wobei die eigentliche Arbeitsvorrichtung samt ihren Versorgungsleitungen aus Gründen der Einfachheit nicht dargestellt ist. Es wird bei dem Ausführungsbeispiel gemäß der Fig. 1 bis 6 das erste Glied 10 der Vorrichtung 100 als eine Art Turm für den Ausleger verwendet und ist daher im Wesentlichen vertikal angeordnet. Dieses Glied 10 ist mit seinen in ihrer Gesamtheit mit 9 bezeichneten Fußpunkten 59, 69, 89 auf einer nicht dargestellten Plattform bzw. einem Fundament oder Grundblock angeordnet zu denken, diese Plattform wiederum kann beispielsweise um die Hochachse drehbar auf einem Kraftfahrzeug, einem Anhänger, einem Waggon und dergleichen gelagert sein.

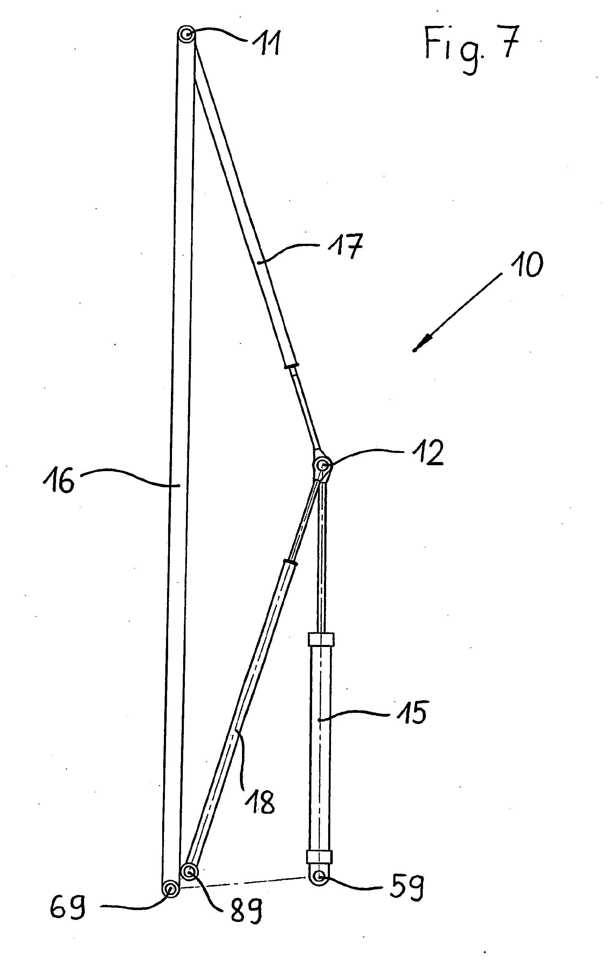

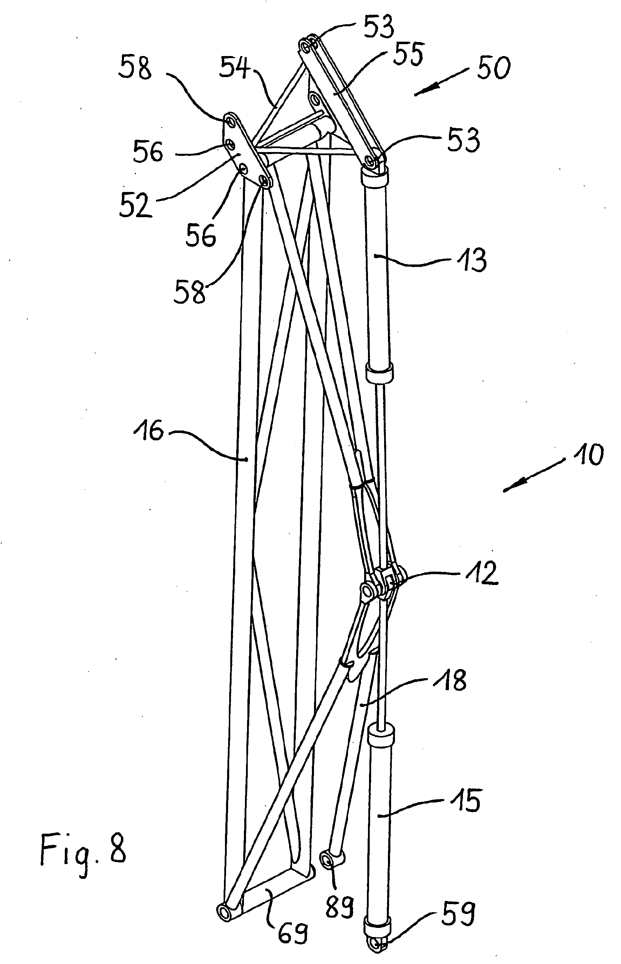

Die einzelnen Glieder 10 weisen nun erfindungsgemäß den folgenden Aufbau auf, der am besten aus Fig. 7 und 8 zu entnehmen ist: Diese Figuren zeigen das Glied 10, in Fig. 8 mit dem folgenden Zwischenstück 50. Das Glied 10 besteht im Wesentlichen aus einem Längsstab 16, an dessen einem Ende, dem Kopfpunkt 11, ein Scherenstab 17 gelenkig angreift, dessen anderes Ende, Kammpunkt 12 genannt, mit einem der Enden des Aktuators 15 verbunden ist. Von diesem Kammpunkt 12 zwischen Scherenstab 17 und Aktuator 15 führt ein Sekundärstab 18 zu einem (Anlenkpunkt bzw. einer Anlenkachse) Fußpunkt 89, der nahe dem Fußpunkt 69 des Längsstabs 6 liegt. Diese Fußpunkte 9 des Aktuators 15, des Längsstabs 16 und des Sekundärstabs 18 sind nun auf einem (nicht dargestellten) starren Fundament der Vorrichtung angelenkt.

Wenn bei fixierten Fußpunkten 9 die Länge des Aktuators 15 verändert wird, so muss sein anderes Ende im Kammpunkt 11 sich entlang des Kreises bewegen, den der Kopfpunkt des Sekundärstabes 18 um seinen Fußpunkt 89 zu schlagen imstande ist. Durch diese Bewegung des als Fußpunkt des Scherenstabs 17 anzusehenden Kammpunktes 12 wirkt der Scherenstab 17 wie ein fußpunktbetätigter Aktuator auf den Endpunkt 11 des Längsstabes 16, der wiederum ausschließlich um seinen Fußpunkt 69 verdreht werden kann, und ändert so die Geometrie des Gliedes 10 und die Lage des Endpunktes 11 gleichermaßen. Ein Zwischenaktuator 13 greift am Kammpunkt 12 mit seinem Fußpunkt an, sein Kopfpunkt ist am Zwischenstück 50 angelenkt und bewirkt so dessen Verdrehung um die durch den Endpunkt 11 definierte Achse (lotrecht zur Zeichenebene), schafft damit den Übergang zum nächsten Glied der kinematischen Kette.

Dies ist insbesondere aus Fig. 8 gut ersichtlich, bei der das Zwischenstück 50 am Ende des Gliedes 10 dargestellt ist: Es besteht im Wesentlichen aus einer Innenplatte 52, einer Außenstange 55 und Verbindungsstäben 54. Die Bezeichnung "Innen" bzw. "Außen" wurde im Hinblick auf die Lage im zusammengefalteten Zustand der Vorrichtung 100 gewählt, es wären "Aktuatorstange 55" und "Rahmenplatte 52" ebenso geeignet. Auf der Innenplatte 52 sind Lager 56 für die Längsstangen 16 und 26 vorgesehen und auch Lager 57 für die Scherenstäbe 17, 27 der benachbarten Glieder 10, 20. Die Außenstange 55 trägt

Lager 53 für den Zwischenaktuator 13 und den Aktuator 25 der benachbarten Glieder 10; 20. Diese Anlenkung des nächsten Gliedes 20 kann der Fig. 1 gut entnommen werden. Wie direkt einsichtig, ist das Lager 57 auf der Seite des Gliedes 10 unbenutzt, da dieses Glied am Zwischenstück 50 mit seinem Endpunkt 11 angelenkt ist.

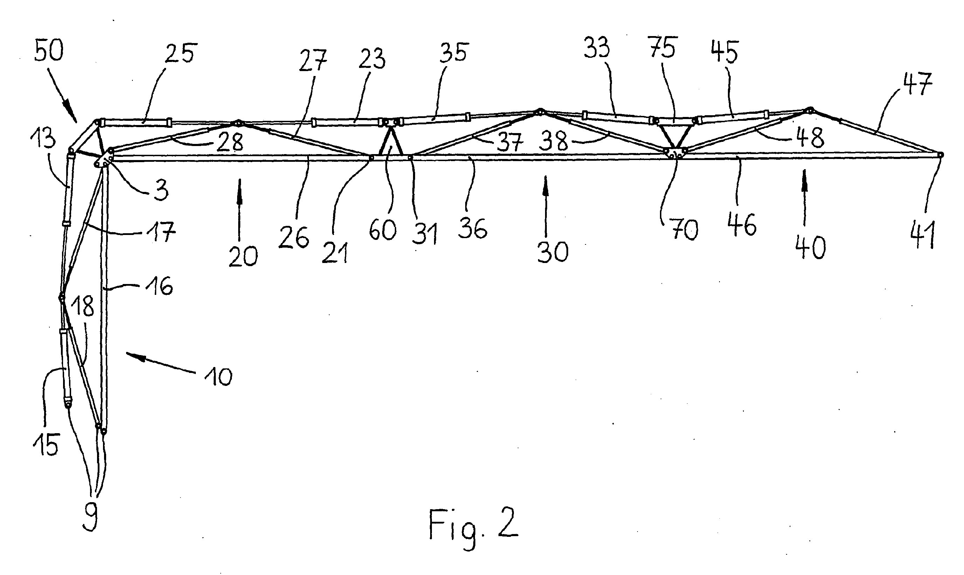

Gleichermaßen ist das zweite äußere Zwischenstück 70 aufgebaut, da dort die beiden benachbarten Glieder 30 und 40 jeweils mit ihrem Fußpunktende angreifen, sind alle Lager des Zwischenstückes belegt und es greifen beidseits die Aktuatoren 35, 45 an der Außenstange 75 an (Fig. 2).

Wenn nun, wie aus Fig. 1 ersichtlich, der Endpunkt 11 des Gliedes 10 am äußeren Zwischenstück 50 angreift und zwischen dem Kammpunkt 12 und dem Zwischenstück 50 ein weiterer, sogenannter Zwischenaktuator 13 vorgesehen ist, so kommt man zu der in Fig. 1 dargestellten Kette einzelner parallelkinematischer Vorrichtungen, denn die einzelnen Glieder 10 stellen, wie anhand der Fig. 7 und 8 erläutert, parallelkinematische Vorrichtungen ganz spezieller Art dar.

Es soll anhand der Fig. 1 noch kurz auf die Ausbildung und Anordnung des als Turm verwendeten Gliedes 10 eingegangen werden: Dieses Glied entspricht dem in Fig. 7 dargestelltem Glied in anderer Ansicht, wobei die Fußpunkte 9 tatsächlich als "echte" Fußpunkte der gesamten Vorrichtung 100 auf einer Plattform oder dergleichen anzusehen sind. Das anschließende, turmnächste Glied 20 ist am äußeren Zwischenstück 50 am oberen Ende des Turmes mit seinen Fußpunkten 9 angelenkt, sodass das innere Zwischenstück 60, so wie das äußere Zwischenstück 70, tatsächlich eine lokale Symmetrieebene festlegt.

Das Zusammenfalten des Auslegers 1 ist aus der Abfolge der Fig. 1 bis 6 ersichtlich, wie daraus hervorgeht, wird durch zunehmende Verlängerungen der Aktuatoren i5 und zunehmende simultane Verkürzung der Aktuatoren i3 die gestreckte Lage des Auslegers 1 verlassen und er gelangt zunehmend in seine zusammengefaltete Form. Zu beachten ist dabei auch, dass sich die Höhe der einzelnen Glieder 10 das ist die Erstreckung normal zur Achse der Längsstäbe i6 und zu der von dieser Achse und der Schwenkachse des Fußpunktes 69 der Längsstäbe i6, während des Zusammenfaltens zunehmend verringert, was es mit sich bringt, dass einerseits die Höhenerstreckung der Glieder 10 und damit das Flächenträgheitsmoment in Arbeitsposition hoch ist, während es in der zusammengefalteten Position nur wenig Platz einnimmt. Dies erfolgt durch die zunehmende Lagenänderung der einzelnen Fußpunkte 9 der Aktuatoren i5 der Sekundärstäbe i8 und der Längsstäbe i6 zueinander.

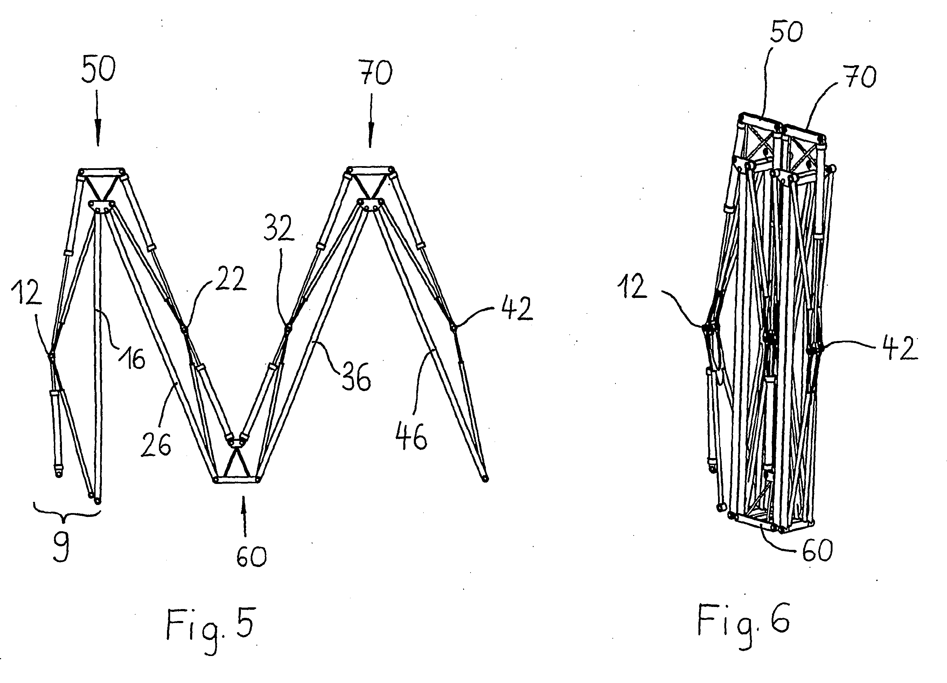

Fig. 6 schließlich zeigt die äußerst kompakte Anordnung des zusammengefalteten Auslegers 1, der sodann noch um eine horizontale Achse gekippt und so auf sein Fahrzeug gelegt werden kann. Aus der Abfolge dieser Figuren geht auch hervor warum das Zwischenstück 4 als inneres Zwischenstück bezeichnet wird, es befindet sich im zusammengeklappten Zustand innen, zwischen den Längsstäben 6 der benachbarten Glieder 2, während die äußeren Zwischenstücke 3 die Längsstäbe 6 der benachbarten Glieder 2 quasi außen umgreifen.

Die Fig. 7 und 8 zeigen, wie bereits oben ausgeführt, eines der Glieder, gewählt wurde das Glied 10, da es vom Blickwinkel her dafür gut geeignet ist. Die anderen Glieder sind völlig gleich aufgebaut, was aber, abgesehen von den kinematischen Eigenschaften, nicht sein muss. Wenn man beispielsweise in Fig. 1 annimmt, dass die erfindungsgemäße Vorrichtung als Kran verwendet wird, so ist ganz klar, dass die Glieder 20, 30 und 40 beim Heben einer Last im Bereich des Endpunktes 41 unterschiedlich belastet werden und daher vorteilhafterweise und Gewicht sparend auch unterschiedlich stark dimensioniert werden. Nur wenn man den Vorteil eines reinen Baukastensystems ausnutzen will, wird man, so wie der Einfachheit halber in der vorliegenden Anmeldung dargestellt, identisch ausgebildete Glieder verwenden.

Zurück zur Fig. 7 und 8 ist erkennbar, dass ein solches erfindungsgemäß ausgebildetes Glied 10 Fußpunkte 59, 69 und 89 des Aktuators 15, des Längsstabes 16 und des Sekundärstabes18 aufweist, die, schon wegen der symmetrischen Ausbildung der Vorrichtung lotrecht zur Zeichenebene und wegen der notwendigen Übertragung von Querkräften und -momenten nicht punktförmig ausgebildet sind, sondern so, wie aus Fig. 1 und 8 ersichtlich ist, jeweils das Verdrehen um zueinander parallele Achsen erlauben. In Fig. 8 scheinen die Achsen der Fußpunkte 69, 89 zu fluchten, doch dies ist nur eine Folge des Blickwinkels.

Das Glied 10 besteht aus einem Längsstab 16, der in der tatsächlichen Ausführungsform als Rahmen ausgebildet ist und in der Verwendung gemäß Fig. 1 auf Druck in Richtung der Hauptachse des Längsstabs 16 beansprucht wird. Die im Zuge der Benutzung beispielsweise als Kran unvermeidlich auftretenden Querkräfte werden durch die rahmenförmige Konstruktion aufgenommen und übertragen. Da es bei der Erfindung im Wesentlichen um das neuartige kinematische Konzept geht, ist diese konstruktive Durchführung in den Zeichnungen angedeutet, wird aber im Folgenden nicht speziell beschrieben.

Weiters weist das Glied 10 Sekundärstäbe 18 auf, deren Kopfpunkt gemeinsam mit dem Kopfpunkt des Aktuators 15 ausgebildet ist und dort einen sogenannten Kammpunkt 12 bildet. An diesem Kammpunkt greifen auch Scherenstäbe 17 an und ein Zwischenaktuator 13.

Die Kopfpunkte der Scherenstäbe 17, die kinematisch, wie aus Fig. 7 ersichtlich ist, wie ein einziger Stab wirken, und der Kopfpunkt der Längsstäbe 16 bilden einen als Lager ausgestalteten Endpunkt 11 aus, um den ein Zwischenstück 50 verschwenkbar ist. Dabei greift der Zwischenaktuator 13 an einem Gelenk 53 des Zwischenstückes 50 an.

Das Zwischenstück 50 ist im Wesentlichen symmetrisch um zwei Ebenen, die Darstellungsebene und eine dazu im gestreckten Zustand der Vorrichtung normal stehende Ebene, ausgebildet und weist auf jeder Seite, die einem Glied 10, 20 zugeordnet ist, Anlenkpunkte 53 den Fußpunkt eines Zwischenaktuators i3 bzw. eines Aktuators i5; Anlenkpunkte 56 für die Kopfpunkte bzw. Fußpunkte 11, 69 der Längsstäbe i6, und Anlenkpunkte 58 für die Fußpunkte 89 der Sekundärstäbe i8 und auf.

Das innere Zwischenstück 60 (Fig. 1) ist anders aufgebaut als die äußeren Zwischenstücke 50 und 70, es besteht im Wesentlichen aus einem pyramidenförmigen Stabwerk, an dessen Spitze zwei Zwischenaktuatoren 23, 33 und an deren Basis zwei Endpunkte 21, 31 angreifen. Dabei weisen die Anlenkachsen der Zwischenaktuatoren bevorzugt nur soviel Abstand voneinander auf, dass sie im gefalteten Zustand der Vorrichtung 100 unmittelbar benachbart zu liegen kommen (Fig. 5 und 6), da so der größte Platzgewinn erzielt wird. Gleichermaßen weist die Basis der Pyramide eine solche Erstreckung auf, dass die Längsstäbe 26, 36 (bzw. Ihre Rahmen) ebenfalls möglichst dicht an dicht zu liegen kommen, wobei auf genügend Raum für die Scherenstäbe 27, 37 geachtet werden muss.

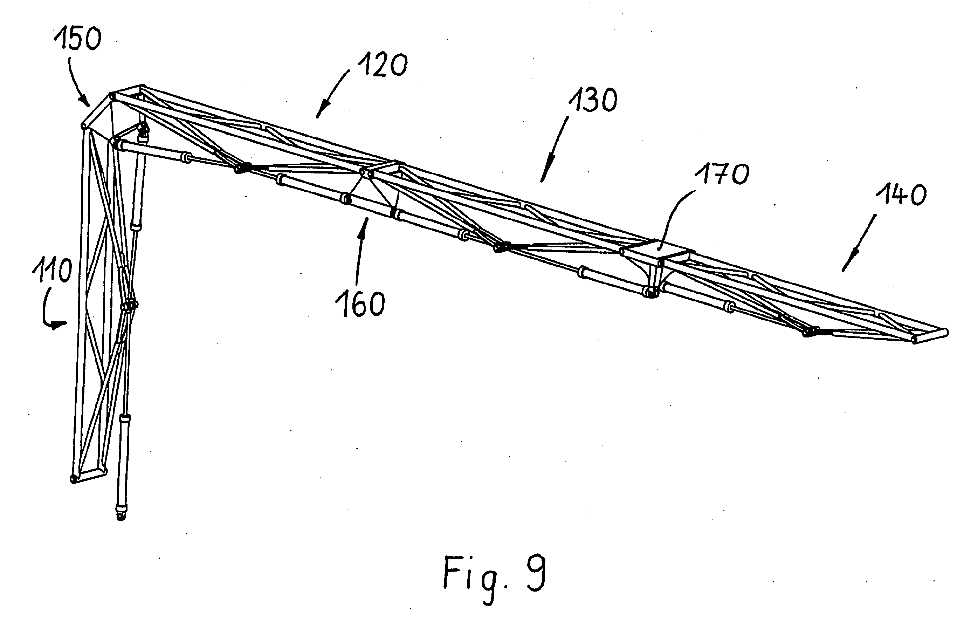

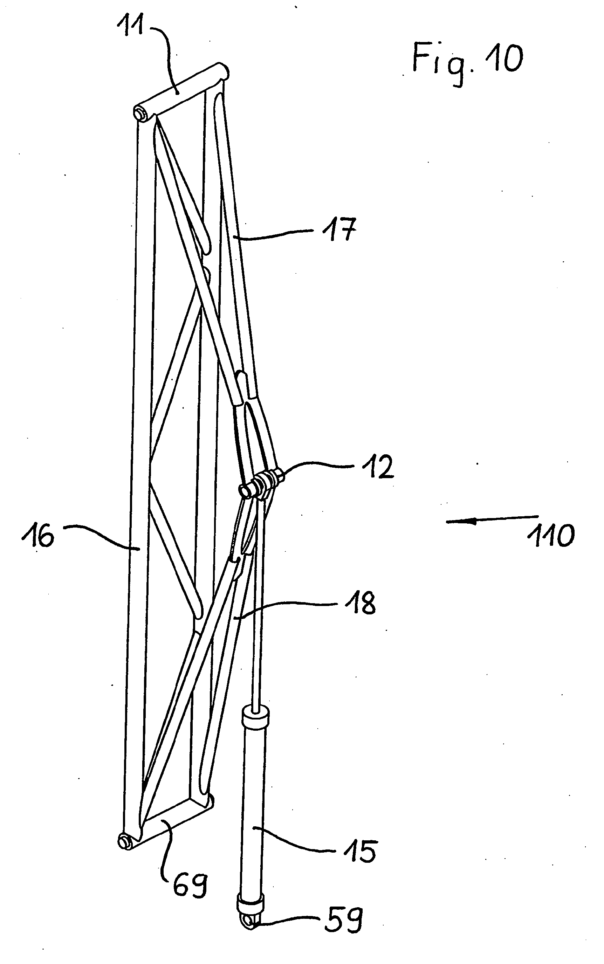

Eine Variante der Erfindung ist in den Fig. 9 bis 12 dargestellt. Dabei sind die einzelnen Glieder 110 bis 140 mit den Zwischengliedern 150, 160 und 170 ähnlich angeordnet wie beim Ausführungsbeispiel 1, doch sind sie insofern einfacher aufgebaut, als sie als eine Art starres, pyramidenförmiges Stabwerk ausgebildet sind, somit die Achsen 69, 89 tatsächlich dauerhaft zusammenfallen, sodass sie aus Gründen der einfacheren Bauart als starre Rahmen ausgebildet sein können. Abgesehen von den unterschiedlichen Bezeichnungen für die einzelnen Glieder wurde wiederum die jeweils gleiche Bezeichnung für deren Elemente, soweit vorhanden, beibehalten.

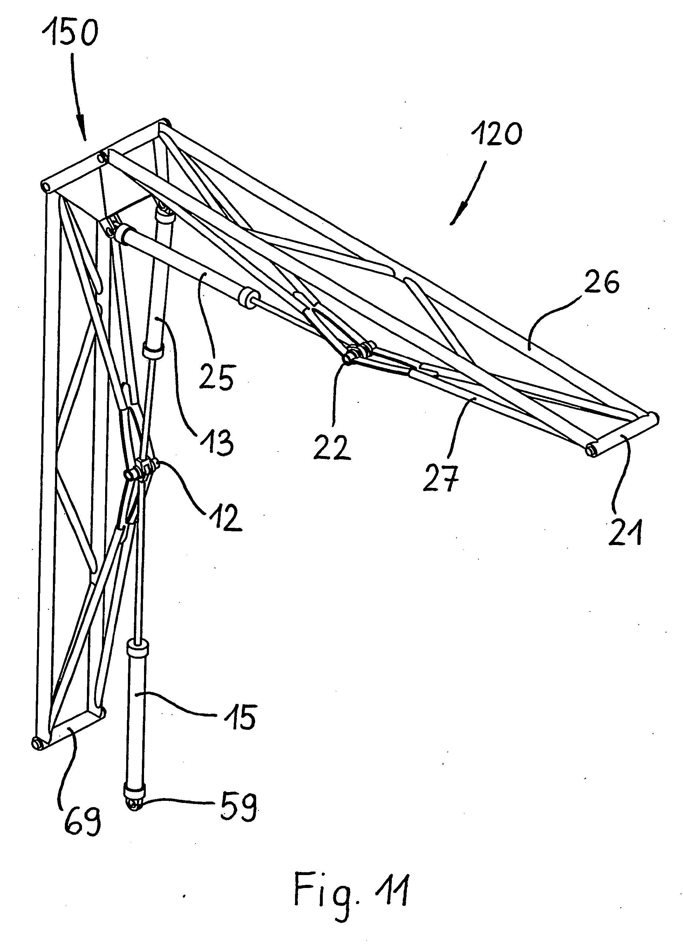

Wie aus Fig. 9 und 11 hervorgeht ist eine Folge der vereinfachten Kinematik, dass die Aktuatoren an den Zwischengliedern 150, 160 und 170 nicht mehr mittig angreifen können, sondern dass die Anlenkpunkte in Richtungen quer zur Symmetrieebene der Vorrichtung, somit in Richtung der Schwenkachsen, zueinander versetzt sein müssen. Insbesondere beim Zwischenglied 150 ist dies bedeutsam, da es hier zu einem Kreuzen der beiden Aktuatoren im Raum kommt. Ihre Angriffspunkte liegen, wie insbesondere die Fig. 11 zeigt, nicht auf einer Geraden die parallel zu den Schwenkachsen verläuft, sondern auf einer windschief liegenden Gerade.

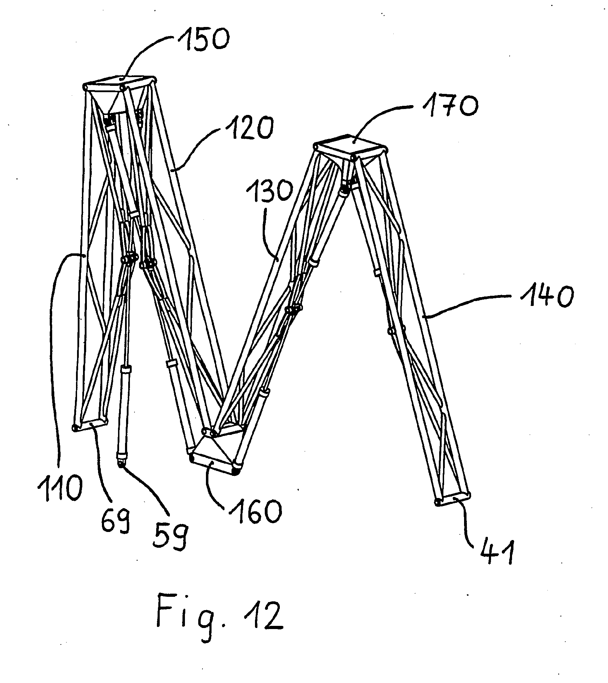

Weiters wurde, um auch diese Möglichkeit zu skizzieren, in diesem Ausführungsbeispiel die Kette der Aktuatoren (für den üblichen Lastfall) als Druckstab ausgebildet. Wie insbesondere die Fig. 12 zeigt, ist die hervorragende Zusammenlegbarkeit dennoch gegeben. Es ist unmittelbar aufgrund des Bauprinzips mit starren pyramidenförmigen Körpern ersichtlich, dass beim Zusammenfalten keine Änderung der Bauhöhe der einzelnen Glieder auftritt, sodass der beim ersten Ausführungsbeispiel geschilderte zusätzliche Gewinn größerer Höhe im Arbeitszustand und kleinerer Höhe im Transportzustand hier nicht erzielt werden kann. Es ist selbstverständlich klar, dass auch bei diesem Ausführungsbeispiel die Verwendung identischer Bauteile auch bei der unmittelbar einsichtigen ungleichen Belastung nicht optimiert ist, es geht bei der Darstellung um die Funktion der Kinematik und nicht um die Verwendung kraftoptimierter Konstruktionsprinzipien.

Die Erfindung ist nicht auf die dargestellten Beispiele beschränkt, sondern kann verschiedentlich abgewandelt werden. So ist eine weitere Auflösung der einzelnen Glieder in Stabwerke möglich, es kann die Zahl der Glieder pro Vorrichtung anders gewählt sein, es ist nicht notwendig, eines der Glieder als Turm auszubilden, es können Zwischenglieder verwendet werden, die ein "Knicken" des Auslegers um Achsen mit anderer Orientierung erlauben, insbesondere kann das letzte Glied um eine Hochachse nach rechts und links schwenkbar ausgebildet werden. Wenn es nicht so sehr auf die Übertragung von Kräften sondern auf den Einsatz unter schwierigen geometrischen Randbedingungen ankommt, so können die Glieder kürzer und die Zwischenstücke beispielsweise zweiteilig und gegeneinander um die Längsachse (im gestreckten Zustand) drehbar ausgebildet werden, was eine Verwendung im Inneren von Gebäuden (Betonpumpe) oder Karosserien (Lackiererei) erleichtert.

Wesentlich ist aber, dass die Vorrichtung zumindest in einem Abschnitt abwechselnd aus länglichen Gliedern und aus Zwischenstücken besteht und dass Aktuatoren, zumeist hydraulische Zylinder-Kolben-Einheiten aber auch Spindel-Mutter-Antriebe oder lineare elektrische Stelltriebe, in speziellen Fällen auch biegeweiche Zugmittel wie Seile, Ketten, etc. einerends an den Gliedern und andernends an einem benachbarten Zwischenstück angreifen.

## Patentansprüche

1. Zusammenklappbarer Ausleger für einen Kran, eine Betonpumpe, einen Kameraträger oder einen Scheinwerfermast mit mehreren, um zueinander parallele Achsen klappbaren Gliedern (10, 20, 30, 40), die mittels Aktuatoren um die Achsen geklappt und in zumindest einer Position fixiert werden können, wobei die einzelnen Glieder des Auslegers über Zwischenstücke (50, 60, 70) miteinander gelenkig verbunden sind, und die Aktuatoren einerends an einem Zwischenstück und andernends an einem ihm benachbarten Glied angreifen, **dadurch gekennzeichnet, dass** zumindest zwei benachbarte seiner Glieder jeweils aus einem Längsstab (16), einem an seinem Endpunkt (11) gelenkig angreifenden Scherenstab (17) und einem am anderen Ende des Scherenstabs, dem Kammpunkt (12) gelenkig angelenkten, in die Nähe des Fußpunktes (69) des Längsstabes (16) reichenden Sekundärstab (18) bestehen, und dass bevorzugt die Aktuatoren (13, 15) am Kammpunkt (12) gelenkig angreifen.

2. Zusammenklappbarer Ausleger nach Anspruch 1, **dadurch gekennzeichnet, dass** die Glieder untereinander im Wesentlichen gleiche Länge aufweisen,

3. Zusammenklappbarer Ausleger nach Anspruch 1 oder 2, **dadurch gekennzeichnet, dass** die Zwischenstücke in Richtung der Auslegerachse wesentlich kürzer ausgebildet sind als die Glieder,

4. Zusammenklappbarer Ausleger nach einem der voranstehenden Ansprüche, **dadurch gekennzeichnet, dass** die Aktuatoren im Wesentlichen mittig an den Gliedern angreifen.

5. Zusammenklappbarer Ausleger nach einem der voranstehenden Ansprüche, **dadurch gekennzeichnet, dass** die Aktuatoren eines Gliedes an einer gemeinsamen Angriffstelle am Glied angreifen.

6. Zusammenklappbarer Ausleger für einen Kran, eine Betonpumpe, einen Kameraträger oder einen Scheinwerfermast mit mehreren, um zueinander parallele Achsen klappbaren Gliedern (10, 20, 30, 40), die mittels Aktuatoren um die Achsen geklappt und in zumindest einer Position fixiert werden können, wobei die einzelnen Glieder des Auslegers über Zwischenstücke (50, 60, 70) miteinander gelenkig verbunden sind, und die Aktuatoren einerends an einem Zwischenstück und andernends ar. einem ihm benachbarten Glied angreifen, **dadurch gekennzeichnet, dass** zumindest zwei benachbarte seiner Glieder jeweils aus einem Längsstab (16), einem an seinem Endpunkt (11) angreifenden Scherenstab (17) und einem am anderen Ende des Scherenstabs, dem Kammpunkt (12) angelenkten, in den Fußpunkt (69) des Längsstabes (16) mündenden Sekundärstab (18) bestehen, und dass die Aktuatoren (13, 15) am Kammpunkt (12) gelenkig angreifen.

7. Zusammenklappbarer Ausleger nach einem der voranstehenden Ansprüche, **dadurch gekennzeichnet, dass** er zumindest ein Zwischenstück (50, 70) aufweist, das auf jeder seiner Seiten, die einem benachbarten Glied (10, 20) zugeordnet ist, Anlenkpunkte (53) für den Fußpunkt eines Zwischenaktuators (13) bzw. eines Aktuators (25); Anlenkpunkte (56) für die Kopfpunkte bzw. Fußpunkte (11, 69) der Längsstäbe (16, 26) und Anlenkpunkte (58) für die Fußpunkte (89) der Sekundärstäbe (18) der benachbarten Glieder aufweist, wobei die Abstände zwischen den Anlenkpunkten (53) für die Aktuatoren (13, 25) zumindest doppelt so groß, bevo zugt dreimal so groß sind wie die Abstände zwischen den Anlenkpunkten (56) für die Längsstäbe (16, 26).

8. Zusammenklappbarer Ausleger nach einem der voranstehenden Ansprüche, **dadurch gekennzeichnet, dass** er zumindest ein Zwischenstück (60) aufweist, das im wesentlichen Pyramidenform besitzt, und dass seine Anlenkpunkte für die Aktuatoren (23, 33) benachbarter Glieder (20, 30) einen Abstand aufweisen, der kleiner is: als die Hälfte, bevorzugt kleiner als ein Drittel des Abstandes, den die Anlenkpunkte für die Endpunkte (21, 31) der Längsstäbe der benachbarten Glieder aufweisen.

## Claims

1. Collapsible boom for a crane jib, a concrete pump, a camera support, or a searchlight mast with several, tiltable around parallel axes, elements (10, 20, 30, 40), which are tilted by actuators around the axes and can be fixed in at least one position, where the individual elements of the boom are hinged to each other via intermediate pieces (50, 60, 70), and that the actuators engage on one end on an intermediate piece and on the other end engage on an element adjacent to it, **characterized by** the fact that
at least two adjacent elements consist of a longitudinal rod (16), a shear rod (17) hinged on its end point (11) and a secondary rod (18) hinged on the other end of the shear rod, the ridge point (12), and extending in the vicinity of the foot point (69) of the longitudinal rod (16), with the actuators (13, 15) being hinged at the ridge point (12).

2. Collapsible boom according to Claim 1, **characterized by** the fact that the elements have essentially the same length.

3. Collapsible boom according to Claim 1 or 2, **characterized by** the fact that the intermediate pieces are designed essentially shorter in the direction of the boom axis than the elements of the boom.

4. Collapsible boom according to one of the preceding claims, **characterized by** the fact that the actuators essentially engage in the center of the elements.

5. Collapsible boom according to one of the preceding claims, **characterized by** the fact that the actuators of one element engage on a common engagement site on the element.

6. Collapsible boom for a crane jib, a concrete pump, a camera support, or a searchlight mast with several, tiltable around parallel axes, elements (10, 20, 30, 40), which are tilted by actuators around the axes and can be fixed in at least one position, where the individual elements of the boom are hinged to each other via intermediate pieces, and that the actuators engage on one end on an intermediate piece and on the other end engage on an element adjacent to it, **characterized by** the fact that
at least two adjacent elements each consist of a longitudinal rod (16), a shear rod (17) engaging on its end point (11) and a secondary rod (18) linked on the other end of the shear rod, the ridge point (12), discharging at the foot point (69) of longitudinal rod (16), with the actuators (13, 15) being hinged at the ridge point (12).

7. Collapsible boom according to one of the preceding claims, **characterized by** the fact that at least one intermediate piece (50, 70) has on each of its sides that are assigned to an adjacent element (10, 20), connection points (53) for the foot point of an intermediate actuator (13) or an actuator (25), respectively; and connection points (56) for the head points and foot points (11, 69) of the longitudinal rods (16, 26) and the connection points (58) for the foot points (89) of the secondary rods (18) of the adjacent elements, in which the distances between the connection points (53) for actuators (13, 25) are at least twice as large, preferably three times as large, as the spacings between the connection points (56) for the longitudinal rods (16, 26).

8. Collapsible boom according to one of the preceding claims, **characterized by** the fact that it has at least one intermediate piece (60) that has an essentially pyramid shape, and that its connection points for actuators (23, 33) of adjacent elements (20, 30) have a spacing that is smaller than half, preferably smaller than one-third, of the spacing associated with the connection points for the end points (21, 31) of longitudinal rods of the adjacent elements.

## Revendications

1. Flèche pliante pour une grue, une pompe à béton, un support de caméra ou un mât de projecteur, avec plusieurs éléments (10, 20, 30, 40) repliables autour d'axes mutuellement parallèles, éléments qui peuvent être repliés autour desdits axes au moyen d'actionneurs et qui peuvent être fixés dans au moins une position, sachant que les éléments individuels de la flèche sont reliés entre eux de façon articulée via des pièces intermédiaires (50, 60, 70), et que les actionneurs agissent à une extrémité sur une pièce intermédiaire et à l'autre extrémité sur un élément voisin de ladite pièce, **caractérisée en ce qu'**au moins deux éléments voisins de la flèche pliante sont respectivement constitués d'une tige longitudinale (16), d'une tige transversale (17) engageant de façon articulée le sommet (11) de la tige longitudinale (16), et d'une tige secondaire (18) engageant de façon articulée l'autre extrémité de la tige transversale, le point de crête (12), et s'étendant jusqu'à proximité du pied (69) de la tige longitudinale (16), et **en ce que**, de préférence, les actionneurs (13, 15) agissent de façon articulée au point de crête (12).

2. Flèche pliante selon la revendication 1, **caractérisée en ce que** les éléments présentent tous sensiblement la même longueur.

3. Flèche pliante selon la revendication 1 ou 2, **caractérisée en ce que** les pièces intermédiaires sont réalisées nettement plus courtes que les éléments dans la direction de l'axe de la flèche.

4. Flèche pliante selon l'une des revendications précédentes, **caractérisée en ce que** les actionneurs agissent sur les éléments essentiellement en leur milieu.

5. Flèche pliante selon l'une des revendications précédentes, **caractérisée en ce que** les actionneurs d'un élément agissent sur cet élément en un point d'attaque commun.

6. Flèche pliante pour une grue, une pompe à béton, un support de caméra ou un mât de projecteur, avec plusieurs éléments (10, 20, 30, 40) repliables autour d'axes mutuellement parallèles, éléments qui peuvent être repliés autour desdits axes au moyen d'actionneurs et qui peuvent être fixés dans au moins une position, sachant que les éléments individuels de la flèche sont reliés entre eux de façon articulée via des pièces intermédiaires (50, 60, 70), et que les actionneurs agissent à une extrémité sur une pièce intermédiaire et à l'autre extrémité sur un élément voisin de ladite pièce, **caractérisée en ce qu'**au moins deux éléments voisins de la flèche pliante sont respectivement constitués d'une tige longitudinale (16), d'une tige transversale (17) engageant le sommet (11) de la tige longitudinale (16), et d'une tige secondaire (18) articulée à l'autre extrémité de la tige transversale, le point de crête (12), et débouchant au pied (69) de la tige longitudinale (16), et **en ce que** les actionneurs (13, 15) agissent de façon articulée au point de crête (12).

7. Flèche pliante selon l'une des revendications précédentes, **caractérisée en ce qu'**elle présente au moins une pièce intermédiaire (50, 70) qui présente, sur chacun des ses côtés qui sont associés à un élément voisin (10, 20), des points d'articulation (53) pour le pied d'un actionneur intermédiaire (13) ou d'un actionneur (25), des points d'articulation (56) pour les sommets ou respectivement les pieds (11, 69) des tiges longitudinales (16, 26), et des points d'articulation (58) pour les pieds (89) des tiges secondaires (18) des éléments voisins, sachant que les distances entre les points d'articulation (53) pour les actionneurs (13, 25) sont au moins égales à deux fois, et de préférence à trois fois, les distances entre les points d'articulation (56) pour les tiges longitudinales (16, 26).

8. Flèche pliante selon l'une des revendications précédentes, **caractérisée en ce qu'**elle présente au moins une pièce intermédiaire (60) qui possède essentiellement une forme pyramidale, et **en ce que** ses points d'articulation pour les actionneurs (23, 33) d'éléments voisins (20, 30) présentent un espacement qui est inférieur à la moitié, de préférence à un tiers, de l'espacement que présentent les points d'articulation pour les sommets (21, 31) des tiges longitudinales des éléments voisins.
